# EUROPÄISCHE PATENTSCHRIFT

(11) **EP 3 529 877 B1**
(45) Veröffentlichungstag und Bekanntmachung des Hinweises auf die Patenterteilung: **22.10.2025**
(21) Anmeldenummer: 17757773.1
(22) Anmeldetag: 28.08.2017
(51) Int. Cl.: H02K 3/12, H02K 15/35

(54) **VERFAHREN ZUM VERBINDEN VON FLACHDRAHTENDEN SOWIE DERART HERGESTELLTER STATOR**
METHOD FOR CONNECTING FLAT WIRE ENDS AND STATOR PRODUCED IN SUCH A WAY
PROCÉDÉ DE CONNEXION D'EXTRÉMITÉS DE FILS PLATS AINSI QUE STATOR FABRIQUÉ DE CETTE MANIÈRE

(30) Priorität: 24.10.2016 DE 102016220863
(43) Veröffentlichungstag der Anmeldung: 28.08.2019
(73) Patentinhaber: Robert Bosch GmbH, 70442 Stuttgart (DE)
(72) Erfinder: ERMER, Martin, 31139 Hildesheim (DE); HEIN, Tobias, 31028 Gronau (Leine) Ot Eitzum (DE); LANGE, Fabian, 30175 Hannover (DE)
(86) Internationale Anmeldenummer: PCT/EP2017/071528
(87) Internationale Veröffentlichungsnummer: WO 2018/077511

(56) Entgegenhaltungen:
- EP-A2- 1 727 260
- JP-A- 2014 007 795
- JP-A- 2016 158 345
- US-A1- 2008 191 574

## Beschreibung

### Stand der Technik

Die vorliegende Erfindung betrifft ein Verfahren zum Verbinden von Flachdrahtenden eines Stators einer elektrischen Maschine sowie einen derart hergestellten Stator einer elektrischen Maschine.

Elektrische Maschinen sind aus dem Stand der Technik in unterschiedlichen Ausgestaltungen bekannt. Um möglichst kleinbauende elektrische Maschinen bereitzustellen, wird versucht, eine Leistungsdichte der elektrischen Maschinen zu erhöhen. Hierbei ist es bekannt, Flachdraht, welcher vier flache Seiten, nämlich zwei Breitseiten und zwei Schmalseiten, aufweist, bei Statoren zu verwenden, um einen Füllfaktor in Nuten eines Stators zu erhöhen. Dadurch kann die elektrische Maschine beispielsweise mit einem höheren Strom betrieben werden, wodurch eine Antriebsleistung erhöht werden kann. Die Drahtverbindungen zwischen den Nuten sind bekannterweise in Wickelköpfen angeordnet, wobei die Wickelköpfe in Axiallänge des Stators möglichst kurz ausgebildet sein sollten, um sicherzustellen, dass ein elektromagnetisch wirksamer Bereich der elektrischen Maschine einen möglichst großen Anteil des axialen Bauraums einnimmt. Bei der Herstellung derartiger Statoren müssen nach dem Wickelvorgang bzw. Montagevorgang freie Flachdrahtenden elektrisch miteinander verbunden werden. Dies erfolgt üblicherweise derart, dass die Flachdrahtenden am Stator zuerst abisoliert werden und dann mittels eines Lasers miteinander verbunden werden. Durch die Verkleinerung der Wickelkopfhöhe in axialer Richtung ergibt sich nun das Problem, dass eine Wärmeeinbringung während des Laserschweißens näher an eine Stelle herankommt, an welcher der Flachdraht das Isolationsmaterial aufweist. Hierbei kann das Isolationsmaterial nur einer bestimmten maximalen Temperatur widerstehen, ohne beschädigt zu werden. Daher müssen bisher die vom Isolationsmaterial befreiten Flachdrahtenden möglichst lang sein, um den thermischen Einfluss auf das restliche Isolationsmaterial des Flachdrahtes zu verringern. Dies kann jedoch dazu führen, dass notwendige Vorgaben für eine Luftstrecke und Kriechstrecke am fertigen Stator nicht mehr eingehalten werden können. Es besteht daher die Notwendigkeit, einen Wickelkopf eines Stators einer elektrischen Maschine bereitzustellen, welcher eine möglichst kleine axiale Bauhöhe aufweist und trotzdem alle notwendigen elektrischen Vorgaben einhalten kann. Aus der DE 102013006361 A1 ist ferner ein Verfahren zum Abisolieren eines zylindrischen elektrischen Leiters bekannt, bei dem nach dem Abisolieren ein mechanisches Aufrauen erfolgt. Weiterer relevanter Stand der Technik ist in US 2008/191574 A1, JP 2014-007795 A, EP 1727260 A2 und JP 2016-158345 A offenbart.

### Offenbarung der Erfindung

Das erfindungsgemäße Verfahren zum Verbinden von freien Flachdrahtenden mit den Merkmalen des Anspruchs 1 weist den Vorteil auf, dass eine signifikante Zeitersparnis beim Vorgang des Abisolierens der Flachdrahtenden möglich ist. Ferner ergibt sich eine verbesserte Isolation zu benachbarten Drähten. Die Flachdrahtenden weisen vier Seiten auf und jedes Flachdrahtende hat einen im Wesentlichen rechteckigen Querschnitt. Insbesondere können an den Eckbereichen der Flachdrähte abgerundete Übergänge zur benachbarten Seite vorgesehen sein. Die Flachdrahtenden sind bei einem Stator einer elektrischen Maschine als Teil einer Wicklung vorgesehen. Das erfindungsgemäße Verfahren umfasst dabei die Schritte des Abisolierens eines mit einem elektrischen Isolationsmaterial versehenen ersten Flachdrahtendes derart, dass zumindest ein teilweises Abisolieren von drei Seiten des Flachdrahtes vorgenommen wird. An der vierten Seite des Flachdrahtes bleibt das Isolationsmaterial jedoch vollständig erhalten. Somit verbleibt bei dem vierseitigen Flachdrahtende eine Seite vollständig bis zum freien Ende des Flachdrahtendes mit Isolationsmaterial versehen. In einem nächsten Schritt wird dann das teilweise abisolierte erste Flachdrahtende mit einem zweiten Flachdrahtende elektrisch verbunden. Der Flachdraht hat ferner den Vorteil, dass ein Füllfaktor von Nuten am Stator der elektrischen Maschine vergrößert werden kann, da durch die im Wesentlichen rechteckigen Flachdrähte ein Luftanteil in den Nuten sehr klein sein kann.

Die Unteransprüche zeigen bevorzugte Weiterbildungen der Erfindung.

Vorzugsweise ist eine erste Seite und eine zweite Seite des Flachdrahtendes bis zu einer Höhe H, ausgehend von einem freien Ende des Flachdrahtendes, nur teilweise abisoliert und eine dritte Seite des Flachdrahtendes ist bis zur Höhe H vollständig abisoliert. Hierdurch kann ein Zeitbedarf zum Abisolieren noch weiter reduziert werden, da zwei Seiten nur teilweise abisoliert sind. In einem alternativen Beispiel (nicht von den Ansprüchen umfasst) sind drei Seiten des Flachdrahtendes bis zur Höhe H vollständig abisoliert. Besonders bevorzugt ist bei dem Fall, in welchem zwei Seiten des Flachdrahtendes nur teilweise abisoliert sind, die abisolierte Fläche an der ersten und zweiten Seite gleich groß. Weiter bevorzugt ist dabei eine Grenzlinie zwischen der abisolierten Fläche und der isolierten Fläche an der ersten und zweiten Seite bogenförmig ausgebildet, insbesondere kreisbogenförmig oder parabelförmig.

Besonders bevorzugt ist auch das zweite Flachdrahtende wie das erste Flachdrahtende an drei Seiten zumindest teilweise abisoliert. Vorzugsweise sind das erste und zweite Flachdrahtende, welche miteinander verbunden werden sollen, dabei in gleicher Weise abisoliert.

Das Verbinden der Flachdrahtenden erfolgt bevorzugt ohne Verwendung eines Zusatzwerkstoffs. Das Verbinden erfolgt mittels eines Lasers. Als Laser kann z.B. ein CO2-Laser und/oder ein Yag-Laser verwendet werden.

Vorzugsweise wird der Laser dabei während des Verbindungsvorgangs hin- und herbewegt, besonders bevorzugt in Richtung der breiten Flachseiten der Flachdrahtenden. Der Laser wird besonders bevorzugt zum Verbinden senkrecht zu den freien Endflächen der Flachdrahtenden, d.h. der Stirnseite, angesetzt.

Gemäß einer weiteren bevorzugten Ausgestaltung der vorliegenden Erfindung wird eine Vielzahl von Flachdrahtenden in Reihe miteinander verbunden, wobei das erste und das letzte Flachdrahtende in der Reihe derart abisoliert sind, dass das Isolationsmaterial an drei Seiten der Flachdrahtenden zumindest teilweise abisoliert wird und an der vierten Seite verbleibt. Die Flachdrahtenden, welche zwischen dem ersten und dem letzten Flachdrahtende in der Reihe angeordnet sind, sind an vier Seiten abisoliert. Somit müssen nicht mehr alle Flachdrahtenden dieser Reihe vollständig abisoliert werden, sondern an dem ersten und dem letzten Flachdrahtende der Reihe verbleibt eine Seite mit Isolation.

Ferner betrifft die vorliegende Erfindung einen Stator einer elektrischen Maschine, umfassend eine Flachdrahtverbindung, hergestellt nach einem erfindungsgemäßen Verfahren. Der Stator ist besonders bevorzugt mit einem Wickelkopf versehen und die Flachdrahtverbindung ist an freien Flachdrahtenden des Wickelkopfs vorgesehen. Die freien Flachdrahtenden sind dabei bevorzugt in Form von zwei Reihen konzentrisch zu einer Mittelachse des Stators angeordnet.

Besonders bevorzugt sind bei dem erfindungsgemäßen Stator benachbarte Flachdrähte dabei mittels einer Aufschmelzung miteinander verbunden, derart, dass ein Abstand jedes Randpunkts am Übergang des isolierten Bereichs zum abisolierten Bereich des Flachdrahtendes einen senkrecht zu einer Tangente an diesem Punkt ermittelten Abstand zu einem Randpunkt der Aufschmelzung aufweist, welcher für alle Randpunkte gleich groß ist. Dadurch ergibt sich eine ovalförmige Randkurve für die die Flachdrähte verbindende Aufschmelzung.

### Kurze Beschreibung der Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine perspektivische Ansicht eines Stators einer elektrischen Maschine, bei welchem das erfindungsgemäße Verfahren angewandt werden kann,
- Figur 2 bis 5: Seitenansichten von Flachdrahtenden des Stators, welche miteinander verbunden werden sollen,
- Figur 6: eine vergrößerte Seitenansicht von zwei miteinander zu verbindenden Flachdrahtenden,
- Figur 7: eine vergrößerte Seitenansicht der beiden Flachdrahtenden von Figur 6 im miteinander verbundenen Zustand,
- Figur 8: eine schematische Seitenansicht von zwei Flachdrahtenden im nicht verbundenen Zustand gemäß einem zweiten Ausführungsbeispiel der Erfindung und
- Figur 9: eine schematische Seitenansicht einer Reihe von Flachdrahtenden im nicht verbundenen Zustand gemäß einem dritten Ausführungsbeispiel der Erfindung.

### Bevorzugte Ausführungsformen der Erfindung

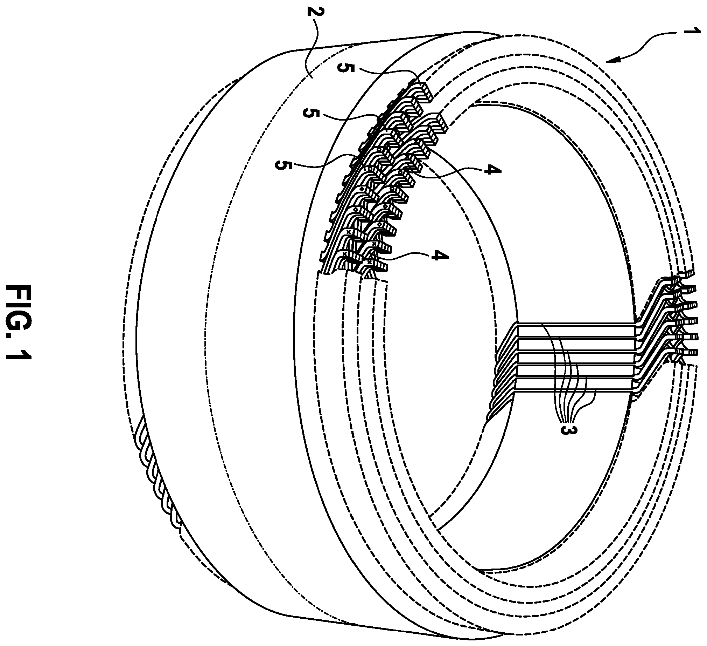

Nachfolgend wird unter Bezugnahme auf die Figuren 1 bis 7 ein Stator 1 und ein erfindungsgemäßes Verfahren zum Verbinden von Flachdrahtenden im Detail beschrieben.

Figur 1 zeigt schematisch einen Stator 1 einer elektrischen Maschine, welcher ein Statorblechpaket 2 mit Statornuten 3 aufweist. In den Statornuten 3 sind jeweils Flachdraht-Leiterelemente einer elektrischen Wicklung angeordnet. Figur 1 zeigt schematisch den Zustand nach einer erfolgten Wicklung bzw. dem Fügen der Wicklungselemente, wobei eine Reihe von jeweils zwei Flachdrahtenden im noch nicht verbundenen Zustand an einer axialen Endseite des Stators angeordnet sind.

Wie aus Figur 1 ersichtlich ist, ist dabei eine Vielzahl von ersten Flachdrahtenden 4 und eine Vielzahl von zweiten Flachdrahtenden 5 jeweils konzentrisch derart angeordnet, dass ein Flachdrahtpaar, umfassend ein erstes Flachdrahtende 4 und ein zweites Flachdrahtende 5, nebeneinander angeordnet ist. Um die elektrische Wicklung zu vervollständigen, müssen nun die beiden Flachdrahtenden, welche jeweils benachbart zueinander angeordnet sind, stoffschlüssig miteinander verbunden werden.

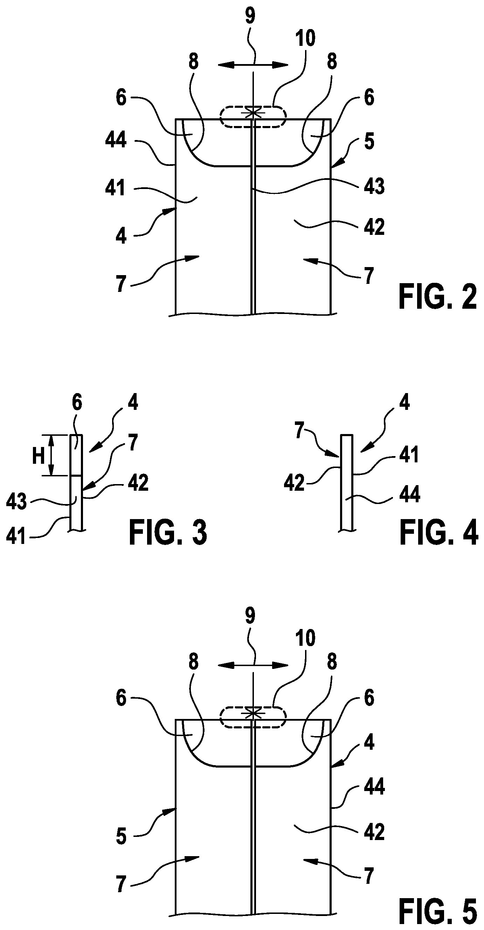

Um diese stoffschlüssige Verbindung zu ermöglichen, wurden die Flachdrähte vor dem Wickelvorgang bzw. Fügevorgang der Wickelelemente an den Flachdrahtenden abisoliert. In den Figuren 2 bis 6 ist nun dargestellt, wie jedes der Vielzahl von Flachdrahtenden 4, 5 abisoliert ist. Figur 2 zeigt schematisch in Vorderansicht ein erstes Flachdrahtende 4 und ein zweites Flachdrahtende 5, welche benachbart zueinander angeordnet sind und miteinander verbunden werden soll. Die beiden Flachdrahtenden 4, 5 sind identisch abisoliert und in Figur 2 spiegelbildlich einander gegenüberliegend angeordnet.

Jedes der Flachdrahtenden 4, 5 weist vier Seiten auf, nämlich zwei breite Flachseiten 41, 42 und zwei schmale Flachseiten 43, 44.

Wie aus den Figuren 2 und 5 ersichtlich ist, ist eine erste Flachseite 41 und eine zweite Flachseite 42, welche die breiten Flachseiten bilden, gleich abisoliert. In den Figuren 2 bis 6 sind die abisolierten Bereiche mit den Bezugszeichen 6 gekennzeichnet und die isolierten Bereiche mit den Bezugszeichen 7 gekennzeichnet.

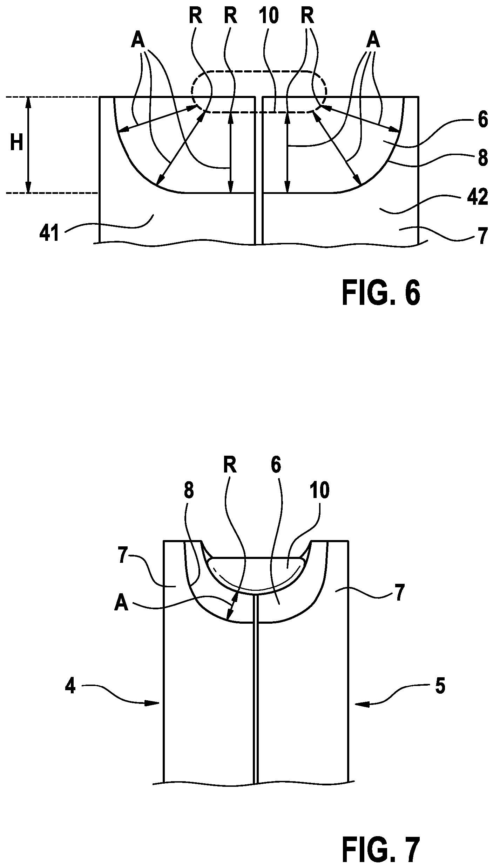

Wie aus den Figuren 2 und 6 ersichtlich ist, sind die abisolierten Bereiche derart ausgebildet, dass die abisolierten Bereiche 6 bis zu einer Höhe H, ausgehend von einem freien Ende der Flachdrahtenden an den breiten Flachseiten, nur teilweise abisoliert sind. Eine dritte Seite 43 ist bis zur Höhe H vollständig abisoliert und eine vierte Seite 44 ist überhaupt nicht abisoliert. An der vierten Seite 44 ist somit noch die Isolation vorhanden.

Wie in Figur 2 und 5 gezeigt, sind an der ersten Flachseite 41 und der zweiten Flachseite 42 das Isolationsmaterial derart abisoliert, dass eine Grenzlinie 8 zwischen dem abisolierten Bereich 6 und dem isolierten Bereich 7 bogenförmig ausgebildet ist.

Somit ist erfindungsgemäß nur eine Seite des Flachdrahtendes bis zu einer Höhe H vollständig abisoliert, nämlich die dritte Flachseite 43, und zwei Seiten des Flachdrahtendes sind nur teilweise abisoliert, nämlich, wie in den Figuren 2, 5 und 6 dargestellt, mit bogenförmiger Grenzlinie 8. Die vierte Flachseite 44 des Flachdrahtes ist nicht abisoliert.

Im Stator sind nun das erste und zweite Flachdrahtende 4, 5, wie in den Figuren 2, 5, 6 und 7 gezeigt, einander gegenüberliegend angeordnet und zwar an den jeweiligen schmalen Flachseiten, welche bis zur Höhe H vollständig abisoliert sind. In einem nächsten Schritt erfolgt nun ein elektrisches Verbinden der beiden Flachdrahtenden 4, 5 an der jeweils vollständig abisolierten Seite 44. Die verbundenen Flachdrahtenden 4, 5 sind in Figur 7 dargestellt.

Somit kann erfindungsgemäß erreicht werden, dass nicht mehr der vollständige Endbereich der Flachdrahtenden 4, 5 an allen vier Seiten bis zu einer gleichen Höhe abisoliert werden muss, sondern eine Abisolation erfolgt lediglich an drei Seiten, wobei nur eine Seite davon vollständig abisoliert wird und die beiden anderen Flachdrahtseiten teilweise abisoliert werden. Die Abisolation erfolgt dabei bevorzugt vor dem Wicklungsvorgang bzw. Fügevorgang der Wickelelemente. Dies ermöglicht insbesondere noch eine genaue Inspektion der Qualität der Abisolation.

Das Verbinden der Flachdrahtenden erfolgt mittels eines Lasers, was, wie in den Figuren 2 und 5 durch den Doppelpfeil 9 angedeutet ist, durch ein lineares Hin- und Herbewegen des Lasers an den Stirnseiten der Flachdrahtenden 4, 5 erfolgt. Dadurch ergibt sich eine Aufschmelzung 10, welche bevorzugt an jedem Randpunkt R einen gleichen Abstand A bis zur Grenzlinie 8 zwischen dem abisolierten Bereich 6 und dem isolierten Bereich 7 aufweist. Der Abstand A wird senkrecht zu jeweils einer Tangente an der Grenzlinie 8 gemessen.

Die Verbindung erfolgt mittels eines Lasers und ohne Verwendung eines Zusatzwerkstoffes. Dadurch kann die elektrische Verbindung sehr einfach und schnell hergestellt werden.

Um einen zu hohen Wärmeeintrag während des Schritts des Verbindens mittels Laser zu vermeiden, wird der Laser mehrfach, wie durch den Doppelpfeil 9 angedeutet, linear an den Stirnseiten der Flachdrahtenden linear hin- und herbewegt.

Die Aufschmelzung 10 ist vorzugsweise ovalförmig.

Es sei angemerkt, dass nach dem Schritt des Verbindens die Aufschmelzung 10 und die weiteren abisolierten Bereiche der Flachdrahtenden 4, 5 zusätzlich noch mit einer weiteren Isolation umschlossen werden können, um Funkenüberschläge zwischen den Leiterenden verschiedener elektrischer Phasen zu vermeiden.

Die Höhe H, bis zu welcher die dritte Seite 43 des Flachdrahtendes 4 vollständig abisoliert wird, wird so gewählt, dass eine sichere elektrische Verbindung von zwei zueinander ausgerichteten, benachbarten Flachdrahtenden 4, 5 möglich ist.

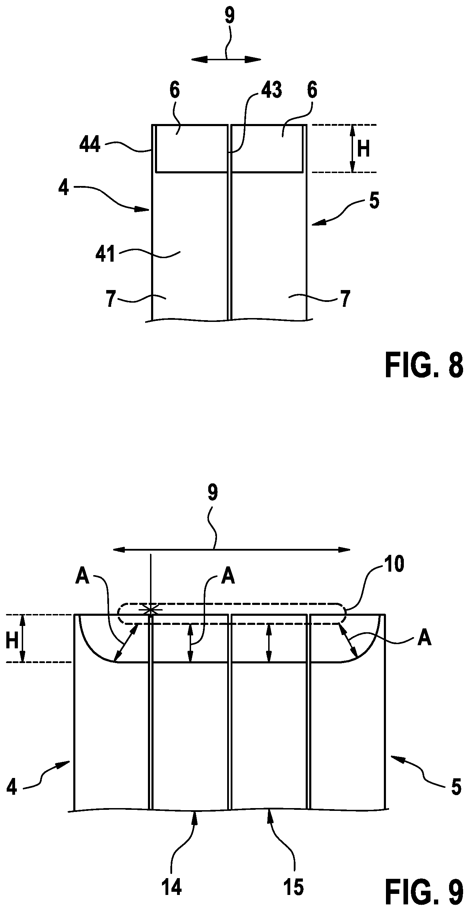

Figur 8 zeigt ein erstes und zweites Flachdrahtende 4, 5 gemäß einem zweiten bevorzugten Ausführungsbeispiel der Erfindung. Im Unterschied zum ersten Ausführungsbeispiel sind beim zweiten Ausführungsbeispiel die breiten Flachseiten 41, 42 vollständig abisoliert. Die schmale dritte Flachseite 43 ist wieder vollständig abisoliert und die vierte Flachseite 44 ist nicht abisoliert und weist somit noch die vollständige Isolation auf. Eine Verbindung der beiden Flachdrahtenden 4, 5 erfolgt wieder durch eine Linearbewegung 9 eines Lasers oder dergleichen zur Herstellung einer Aufschmelzung zwischen den beiden Flachdrahtenden 4, 5, wie im ersten Ausführungsbeispiel.

Figur 9 zeigt eine Anordnung von Flachdrahtenden eines Stators gemäß einem dritten Ausführungsbeispiel der Erfindung. Wie aus Figur 9 ersichtlich ist, sind insgesamt vier Flachdrahtenden in Reihe und zueinander an den Schmalseiten ausgerichtet, angeordnet. Dabei umfasst die Reihenanordnung der Flachdrahtenden ein erstes Flachdrahtende 4, ein zweites Flachdrahtende 5, ein drittes Flachdrahtende 14 und ein viertes Flachdrahtende 15. Das erste Flachdrahtende 4 und das zweite Flachdrahtende 5 sind wie im ersten Ausführungsbeispiel abisoliert. D. h. das erste und zweite Flachdrahtende 4, 5 weist zwei zumindest teilweise abisolierte Bereiche auf und einen nicht abisolierten Bereich 44 sowie einen bis zu einer Höhe H vollständig abisolierten Bereich 43 auf. Das dritte Flachdrahtende 14 und das vierte Flachdrahtende 15 sind ebenfalls identisch abisoliert und sind an allen vier Seiten bis zur Höhe H abisoliert. Eine elektrische Verbindung der vier angeordneten Flachdrahtenden 4, 5, 14, 15 erfolgt wiederum durch eine wie durch den Doppelpfeil 9 angedeutete Linearbewegung beispielsweise eines Lasers zur Herstellung der Aufschmelzung 10, um die vier Flachdrahtenden elektrisch miteinander zu verbinden. Das dritte Ausführungsbeispiel soll verdeutlichen, dass es möglich ist, dass eine Vielzahl von Flachdrahtenden in Reihe hintereinander angeordnet werden können, wobei das jeweils erste und letzte Flachdrahtende entsprechend der erfindungsgemäßen Vorschrift nur an drei Seiten zumindest teilweise abisoliert ist. Es sei angemerkt, dass das erste und letzte Flachdrahtende der Reihe der Vielzahl von Flachdrahtenden auch wie im zweiten Ausführungsbeispiel in Figur 8 dargestellt, an drei Seiten vollständig abisoliert sein kann und an der vierten Seite nicht abisoliert sein kann.

Somit kann erfindungsgemäß eine Zeitdauer für den Schritt des Abisolierens von Flachdrahtenden signifikant reduziert werden. Da bei einem Stator eine Vielzahl von Flachdrahtenden abzuisolieren sind, ergeben sich durch das Aufsummieren der jeweils kleinen Zeitabstände, welche beim Abisolierungsschritt eingespart werden, eine insgesamt große Zeitersparnis, was sich in einem großen Kostenvorteil dieses Massenbauteils niederschlägt. Der Wickelvorgang bzw. Fügevorgang der Wickelelemente der abisolierten Flachdrähte kann dann in gewohnter Weise erfolgen, genauso wie das elektrische Verbinden, vorzugsweise mittels Laser.

## Patentansprüche

1. Verfahren zum Verbinden von freien Flachdrahtenden (4, 5) eines Stators einer elektrischen Maschine, wobei die freien Flachdrahtenden (4, 5) jeweils vier Seiten (41, 42, 43, 44) aufweisen und einen rechteckigen-Querschnitt haben, umfassend die Schritte:
- Abisolieren eines mit einem Isolationsmaterial ummantelten ersten Flachdrahtendes (4) derart, dass an drei Seiten (41, 42, 43) ein Abisolieren vorgenommen wird, wobei an einer dritten Seite (43) der vier Seiten (41, 42, 43, 44) bis zu einer Höhe H, ausgehend von einem freien Ende des ersten Flachdrahtendes (4), vollständig abisoliert ist,
- stoffschlüssiges Verbinden des abisolierten ersten Flachdrahtendes (4) an der vollständig abisolierten dritten Seite (43) mit einem zweiten Flachdrahtende (5) an dessen vollständig abisolierter dritter Seite (43), **dadurch gekennzeichnet, dass**
- der Schritt des stoffschlüssigen Verbindens mittels Laserschweißen erfolgt,
- die erste Seite (41) und die zweite Seite (42) bis zur Höhe H nur teilweise abisoliert werden unter Bildung einer mit Abstand (A) unterhalb einer Aufschmelzung (10) verlaufenden Grenzlinie zwischen einem abisolierten Bereich (6) und einem isolierten Bereich (7),
- an einer der dritten Seite (43) gegenüberliegenden vierten Seite (44) des ersten Flachdrahtendes (4) das Isolationsmaterial vollständig verbleibt.

2. Verfahren nach Anspruch 1, wobei die abisolierten Flächen an der ersten Seite (41) und der zweiten Seite (42) gleich groß sind.

3. Verfahren nach Anspruch 1 oder 2, wobei eine Grenzlinie (8) zwischen dem abisolierten Bereich (6) und dem isolierten Bereich (7) des ersten Flachdrahtendes (4) bogenförmig, insbesondere kreisbogenförmig oder parabelförmig, ausgebildet ist.

4. Verfahren nach einem der vorhergehenden Ansprüche, **dadurch gekennzeichnet, dass** das zweite Flachdrahtende (5) in gleicher Weise wie das erste Flachdrahtende (4) abisoliert ist.

5. Verfahren nach einem der vorhergehenden Ansprüche, wobei das erste und zweite Flachdrahtende (4, 5) ohne Verwendung eines Zusatzwerkstoffs miteinander verbunden werden.

6. Verfahren nach einem der vorhergehenden Ansprüche, wobei eine Schweißeinrichtung zur Herstellung der elektrischen Verbindung zwischen dem ersten und zweiten Flachdrahtende (4, 5) linear mehrfach hin- und herbewegt wird.

7. Verfahren nach einem der vorherigen Ansprüche, wobei eine Vielzahl von Flachdrahtenden in Reihe angeordnet und miteinander verbunden sind, und wobei das erste Flachdrahtende (4) und das letzte Flachdrahtende (5) der Reihe von Flachdrahtenden derart abisoliert sind, dass das Isolationsmaterial an drei Seiten des ersten und letzten Flachdrahtendes zumindest teilweise abisoliert wird und an der vierten Seite verbleibt, wobei die zwischen dem ersten und letzten Flachdrahtende (4,5) liegenden Flachdrahtenden an allen vier Seiten bis zur Höhe H abisoliert sind

8. Stator einer elektrischen Maschine, umfassend eine stoffschlüssige Flachdrahtverbindung zwischen einem ersten Flachdrahtende (4) und einem zweiten Flachdrahtende (5), wobei drei Seiten (41, 42, 43) des ersten Flachdrahtendes (4) und drei Seiten (41, 42, 43) des zweiten Flachdrahtendes (5)abisoliert sind , wobei eine dritte Seite (43) der vier Seiten (41, 42, 43, 44) bis zu einer Höhe H, ausgehend von einem freien Ende des ersten Flachdrahtendes (4), vollständig abisoliert ist,
**dadurch gekennzeichnet, dass**
- an einer der dritten Seite (43) gegenüberliegenden vierten Seite (44) des ersten Flachdrahtendes (4) und an einer der dritten Seite (43) gegenüberliegenden vierten Seite (44) des zweiten Flachdrahtendes (5) das Isolationsmaterial vollständig verbleibt ,
- die erste Seite (41) und die zweite Seite (42) bis zur Höhe H nur teilweise abisoliert werden unter Bildung einer mit Abstand (A) unterhalb einer Aufschmelzung (10) verlaufenden Grenzlinie zwischen einem abisolierten Bereich (6) und einem isolierten Bereich (7) und dass
- die Flachdrahtverbindung eine Laserschweißverbindung ist.

9. Stator nach Anspruch 8, wobei benachbarte Flachdrähte (4, 5) mittels einer Aufschmelzung (10) miteinander verbunden sind, derart, dass ein Abstand (A) jedes Punktes einer Grenzlinie (8) zwischen einem abisolierten Bereich (6) und einem isolierten Bereich (7) der Flachdrahtenden senkrecht zu einer Tangente an der Grenzlinie (8) bis zu einem Randpunkt (R) der Aufschmelzung (10) gleich groß ist.

## Claims

1. Method for connecting free flat wire ends (4, 5) of a stator of an electrical machine, wherein the free flat wire ends (4, 5) each have four sides (41, 42, 43, 44) and a rectangular cross section, comprising the steps:
- stripping of a first flat wire end (4) coated with an insulation material in such a way that a stripping is carried out on three sides (41, 42, 43), wherein a third side (43) of the four sides (41, 42, 43, 44) is fully stripped to an extent H, starting from a free end of the first flat wire end (4),
- substance-to-substance connection of the stripped first flat wire end (4) on the fully stripped third side (43) to a second flat wire end (5) on its fully stripped third side (43),
**characterized in that**
- the step entailing substance-to-substance connection takes place by means of laser welding,
- the first side (41) and the second side (42) are only partially stripped to the extent H so as to form a boundary line between a stripped region (6) and an insulated region (7) extending with a spacing (A) below a melting (10),
- the insulation material remains completely intact on a fourth side (44) of the first flat wire end (4) opposite the third side (43).

2. Method according to Claim 1, wherein the stripped surfaces on the first side (41) and the second side (42) are identical in size.

3. Method according to Claim 1 or 2, wherein a boundary line (8) between the stripped region (6) and the insulated region (7) of the first flat wire end (4) is arched, in particular circularly arched or parabolic.

4. Method according to one of the preceding claims, **characterized in that** the second flat wire end (5) is stripped in the same way as the first flat wire end (4).

5. Method according to one of the preceding claims, wherein the first and second flat wire end (4, 5) are connected to one another without using an additional material.

6. Method according to one of the preceding claims, wherein a welding device for establishing the electrical connection between the first and second flat wire end (4, 5) is moved back and forth several times in a linear manner.

7. Method according to one of the preceding claims, wherein a multiplicity of flat wire ends are arranged in a row and connected to one another, and wherein the first flat wire end (4) and the last flat wire end (5) of the row of flat wire ends are stripped in such a way that the insulation material is at least partially stripped on three sides of the first and last flat wire end and remains intact on the fourth side, wherein the flat wire ends situated between the first and the last flat wire end (4, 5) are stripped on all four sides to the extent H.

8. Stator of an electrical machine, comprising a substance-to-substance flat wire connection between a first flat wire end (4) and a second flat wire end (5), wherein three sides (41, 42, 43) of the first flat wire end (4) and three sides (41, 42, 43) of the second flat wire end (5) are stripped, wherein a third side (43) of the four sides (41, 42, 43, 44) is fully stripped to an extent H, starting from a free end of the first flat wire end (4),
**characterized in that**
- the insulation material remains completely intact on a fourth side (44) of the first flat wire end (4) opposite the third side (43) and on a fourth side (44) of the second flat wire end (5) opposite the third side (43),
- the first side (41) and the second side (42) are only partially stripped to the extent H so as to form a boundary line between a stripped region (6) and an insulated region (7) extending with a spacing (A) below a melting (10), and **in that**
- the flat wire connection is a laser welding connection.

9. Stator according to Claim 8, wherein adjacent flat wires (4, 5) are connected to each other by means of a melting (10) in such a way that a spacing (A) of each point of a boundary line (8) between a stripped region (6) and an insulated region (7) of the flat wire ends perpendicular to a tangent on the boundary line (8) is identical in size up to an edge point (R) of the melting (10).

## Revendications

1. Procédé pour relier des extrémités libres (4, 5) de fils plats d'un stator d'une machine électrique, les extrémités libres (4, 5) de fils plats comprenant chacune quatre côtés (41, 42, 43, 44) et ayant une section transversale rectangulaire, qui comprend les étapes suivantes :
- dénuder une première extrémité (4) de fil plat recouverte d'un matériau isolant de telle sorte qu'un dénudage est effectué sur trois côtés (41, 42, 43), un troisième côté (43) des quatre côtés (41, 42, 43, 44) étant entièrement dénudé jusqu'à une hauteur H, à partir d'une extrémité libre de la première extrémité (4) de fil plat,
- assembler par liaison de matière la première extrémité (4) de fil plat dénudée sur le troisième côté (43) entièrement dénudé à une deuxième extrémité (5) de fil plat ayant son troisième côté (43) entièrement dénudé,
**caractérisé en ce que**
- l'étape de l'assemblage par liaison de matière est réalisée par soudage au laser,
- le premier côté (41) et le deuxième côté (42) ne sont dénudés que partiellement jusqu'à la hauteur H, en formant une ligne de délimitation entre une zone dénudée (6) et une zone isolée (7), s'étendant à une distance (A) en dessous d'une zone de fusion (10),
- le matériau isolant reste entièrement sur un quatrième côté (44) de la première extrémité (4) de fil plat opposé au troisième côté (43).

2. Procédé selon la revendication 1, dans lequel les surfaces dénudées sur le premier côté (41) et le deuxième côté (42) sont de taille identique.

3. Procédé selon la revendication 1 ou la revendication 2, dans lequel une ligne de délimitation (8) entre la zone dénudée (6) et la zone isolée (7) de la première extrémité (4) de fil plat est réalisée selon une forme arquée, en particulier selon une forme en arc de cercle ou une forme en parabole.

4. Procédé selon l'une des revendications précédentes, **caractérisé en ce que** la deuxième extrémité (5) de fil plat est dénudée de la même manière que la première extrémité (4) de fil plat.

5. Procédé selon l'une des revendications précédentes, dans lequel les première et deuxième extrémités (4, 5) de fil plat sont reliées entre elles sans utilisation d'un matériau additionnel.

6. Procédé selon l'une des revendications précédentes, dans lequel un dispositif de soudage est déplacé plusieurs fois de manière linéaire selon un mouvement de va-et-vient pour établir la connexion électrique entre les première et deuxième extrémités (4, 5) de fil plat.

7. Procédé selon l'une des revendications précédentes, dans lequel une pluralité d'extrémités de fils plats sont agencées en série et reliées entre elles, et dans lequel la première extrémité (4) de fil plat et la dernière extrémité (5) de fil plat de la série d'extrémités de fils plats sont dénudées de telle sorte que le matériau isolant est au moins partiellement retiré sur trois côtés de la première et de la dernière extrémité de fil plat et reste sur le quatrième côté, les extrémités de fils plats situées entre la première et la dernière extrémité de fil plat (4, 5) étant dénudées sur les quatre côtés jusqu'à la hauteur H.

8. Stator d'une machine électrique, comprenant un assemblage de fils plats par liaison de matière entre une première extrémité (4) de fil plat et une deuxième extrémité (5) de fil plat, trois côtés (41, 42, 43) de la première extrémité (4) de fil plat et trois côtés (41, 42, 43) de la deuxième extrémité (5) de fil plat étant dénudés, un troisième côté (43) des quatre côtés (41, 42, 43, 44) étant dénudé jusqu'à une hauteur H, à partir d'une extrémité libre de la première extrémité (4) de fil plat,
**caractérisé en ce que**
- le matériau isolant reste entièrement sur un quatrième côté (44) de la première extrémité (4) de fil plat opposé au troisième côté (43) et sur un quatrième côté (44) de la deuxième extrémité (5) de fil plat opposé au troisième côté (43),
- le premier côté (41) et le deuxième côté (42) ne sont dénudés que partiellement jusqu'à la hauteur H, formant une ligne de délimitation entre une zone dénudée (6) et une zone isolée (7), s'étendant sur une distance (A) en dessous d'une zone de fusion (10), et **en ce que**
- la liaison des fils plats est une liaison par soudage au laser.

9. Stator selon la revendication 8, dans lequel des fils plats adjacents (4, 5) sont reliés entre eux au moyen d'une fusion (10) de telle sorte qu'une distance (A) entre chaque point d'une ligne de délimitation (8) entre une zone dénudée (6) et une zone isolée (7) des extrémités de fils plats soit, perpendiculairement à une tangente à la ligne de délimitation (8) jusqu'à un point de bord (R) de la fusion (10), la même.
